# EUROPÄISCHE PATENTSCHRIFT

(11) **EP 2 866 321 B1**
(45) Veröffentlichungstag und Bekanntmachung des Hinweises auf die Patenterteilung: **07.03.2018**
(21) Anmeldenummer: 13005120.4
(22) Anmeldetag: 28.10.2013
(51) Int. Cl.: H02G 3/10

(54) **Steckdosenanordnung**
Socket device
Agencement de prise

(43) Veröffentlichungstag der Anmeldung: 29.04.2015
(73) Patentinhaber: Hugo Brennenstuhl GmbH & Co. KG, 72074 Tübingen (DE)
(72) Erfinder: Brennenstuhl, Hugo, 72074 Tübingen (DE)
(74) Vertreter: Patentanwälte Magenbauer & Kollegen Partnerschaft mbB

(56) Entgegenhaltungen:
- EP-A1- 2 081 263
- EP-A1- 2 106 001
- EP-A2- 1 156 568
- FR-A1- 2 652 682

## Beschreibung

Die Erfindung betrifft eine Steckdosenanordnung, mit einem Gehäuse, dass wenigstens eine Steckdose aufweist, wobei das Gehäuse zwei zueinander entgegengesetzt angeordnte Gehäuse-Enden aufweist, an denen jeweils ein Endabschnitt angeordnet ist.

Steckdosenanordnungen, beispielsweise in Form von Steckdosenleisten, werden in der Regel mit ihrem Gehäuse-Boden auf dem Untergrund abgestellt. Eine Lagefixierung der Steckdosenanordnung findet nicht statt. Es ist jedoch bereits bekannt, dass an einem Endabschnitt einer Steckdosenanordnung eine Befestigungslasche zu deren Befestigung an einem Peripheriebauteil, beispielsweise Gebäudewand, angeformt ist. Ist die Steckdosenanordnung ein Kunststoffspritzgieß-Bauteil, was durchaus häufig der Fall ist, lässt sich die Befestigungslasche gleich bei der Herstellung der Steckdosenanordnung mit anformen.

Grundsätzlich ist es möglich, Steckdosenanordnungen, insbesondere Steckdosenleisten aus einem Stück herzustellen, insbesondere mittels Kunststoffspritzgießen, wobei beim Spritzgießprozess die Steckdosen und gegebenenfalls die Befestigungslasche gleich mit ausgebildet werden. Alternativ ist es jedoch auch möglich, einen Grundkörper aus Metallmaterial bereitzustellen, in den dann eine aus Kunststoff bestehende Steckdosenbaugruppe eingesetzt ist. Als Metallmaterial eignet sich beispielsweise Aluminium, wobei der Grundkörper in diesem Fall zweckmäßigerweise als Aluminium-Strangpressbauteil ausgebildet ist. Bei dieser Art von Steckdosenanordnungen ist der Grundkörper zu beiden Seiten offen und wird durch vom Grundkörper separate Endstücke endseitig verschlossen. Die Endstücke bestehen in der Regel aus Kunststoffmaterial.

Aufgabe der Erfindung ist es, eine Steckdosenanordnung der eingangs erwähnten Art zu beschaffen, die gegenüber Steckdosenanordnungen aus dem Stand der Technik insbesondere bei der Befestigung und Anlagerung an Peripheriebauteilen ein breiteres Anwendungsspektrum bietet.

Diese Aufgabe wird durch eine Steckdosenanordnung mit den Merkmalen des unabhängigen Anspruchs 1 gelöst. Weiterbildungen der Erfindung sind in den Unteransprüchen dargestellt.

Die erfindungsgemäße Steckdosenanordnung zeichnet sich dadurch aus, dass wenigstens einer der Endabschnitte wenigstens eine Befestigungsschnittstelle zur lösbaren Befestigung eines Befestigungselements aufweist, dass seinerseits zur Befestigung und Anlagerung an einem Peripheriebauteil dient, und wobei die Steckdosenanordnung wenigstens ein Befestigungselement aufweist.

Die Befestigungsschnittstelle zur lösbaren Befestigung des Befestigungselements erlaubt also eine bedarfsgerechte Anpassung an unterschiedliche Unterbringungsorte für die Steckdosenanordnung. Soll die Steckdosenanordnung nicht lagestabil fixiert werden und beispielsweise lediglich auf den Boden gelegt werden, so lässt sich das Befestigungselement auch abnehmen. Soll das Befestigungselement jedoch zur Befestigung der Steckdosenanordnung an einem Peripheriebauteil, beispielsweise Gebäudewand, verwendet werden, so ist die Befestigungsschnittstelle am Endabschnitt mit dem hierfür vorgesehenen Befestigungselement zu bestücken.
Bei einer Weiterbildung der Erfindung ist wenigstens einer der Endabschnitte als ein separat vom Gehäuse ausgebildetes und am zugeordneten Gehäuse-Ende insbesondere lösbar befestigbares Endstück ausgebildet. Bei dieser Variante befindet sich die Befestigungsschnittstelle also am Endstück. Solche Steckdosenanordnungen können beispielsweise einen insbesondere metallischen Grundkörper aufweisen, in den eine Steckdosen-Baugruppe, die zweckmäßigerweise aus Kunststoff besteht, eingesetzt ist. Der nach beiden Seiten offene Grundkörper lässt sich dann durch die Endstücke, die insbesondere kappenartig ausgestaltet sind, verschließen.
Alternativ ist es möglich, dass wenigstens einer der Endabschnitte einstückig an das Gehäuse angeformt ist und das Gehäuse-Ende bildet. Bei dieser Variante lässt sich also die Befestigungsschnittstelle bei der Herstellung des Gehäuses gleich mit anformen. Gemäß der Erfindung sind wenigstens zwei Befestigungselemente vorgesehen, die sich voneinander in Ausgestaltung und Funktionalität der Befestigung und Anlagerung an einem Peripheriebauteil unterscheiden. Besonders bevorzugt ist die wenigstens eine Befestigungsschnittstelle zur wahlweisen Befestigung des einen oder des anderen Befestigungselementes eingerichtet. Die Steckdosenanordnung umfasst als Baugruppe also mindestens zwei Befestigungselemente, die ganz unterschiedlich ausgebildet sind. Beispielsweise könnte das eine Befestigungselement zur Anlagerung an ein Peripheriebauteil dienen, während das andere Befestigungselement zur Befestigung an einem Peripheriebauteil dient. Zweckmäßigerweise kann die wenigstens eine Befestigungsschnittstelle wahlweise mit dem einen oder dem anderen Befestigungselement bestückt werden, sodass je nach Bestückung mit dem einen oder anderen Befestigungselement eine Anpassung an ganz unterschiedliche Unterbringungsorte für die Steckdosenanordnung möglich ist. Gemäß der Erfindung sind am wenigstens einen Endabschnitt mehrere Befestigungsschnittstellen ausgebildet, an denen jeweils ein zugeordnetes Befestigungselement befestigbar oder befestigt ist. Durch die Ausbildung mehrerer Befestigungsschnittstellen ist es möglich, gleichzeitig mehrere Befestigungselemente anzubringen, die beispielsweise dann eingesetzt werden, wenn die Steckdosenanordnung bei besonders robusten Umgebungsbedingungen besonders lagestabil fixiert werden soll.
Es ist möglich, dass sich die Befestigungsschnittstellen voneinander in ihrer Ausgestaltung unterscheiden und ganz individuell auf einen ganz besonderen Typ des Befestigungselementes angepasst sind. In diesem Fall ist es also möglich, ein ganz bestimmtes Befestigungselement nur an der zugeordneten an das Befestigungselement angepassten Befestigungsschnittstelle zu befestigen. Gemäß der Erfindung weist die wenigstens eine Befestigungsschnittstelle einen sich im Wesentlichen parallel zum Gehäuse-Boden streckenden Aufnahmeschlitz zur Aufnahme und Halterung eines Befestigungselementes auf. Erfinderungsgemäß ist das Befestigungselement in Form einer mit wenigstens einem Montageabschnitt mit wenigstens einem Montageloch ausgestatteten Befestigungsplatte ausgebildet. Die Befestigungsplatte lässt sich dann in einfacher und schnellerer Weise in den zugeordneten Aufnahmeschlitz der Befestigungsschnittstelle einstecken. Zweckmäßigerweise steht der Montageabschnitt in der Einbaulage der Befestigungsplatte derart vom Endabschnitt ab, dass eine Befestigung der Steckdosenanordnung an einem Peripheriebauteil, beispielsweise Gebäudewand, mittels mit dem Montageloch zusammenwirkender Montageelemente, beispielsweise Nägel oder Schrauben, möglich ist. Gemäß der Erfindung ist die Befestigungsplatte als Wendeplatte mit wenigstens zwei voneinander verschiedenartig ausgebildeten Montageabschnitten mit jeweils wenigstens einem Montageloch ausgebildet, wobei in der Einbaulage wahlweise der eine oder der andere Montageabschnitt für Befestigungszwecke aktiv ist. Es ist also möglich, dass durch Drehen der Befestigungsplatte um insbesondere 180° entweder der eine oder der andere Montageabschnitt zur Befestigung an einem Peripheriebauteil zu nutzen ist, wodurch sich wiederum eine Anpassung an unterschiedliche Unterbringungsorte durchführen lässt.
Es ist möglich, dass der Aufnahmeschlitz als Durchsteckschlitz ausgebildet ist, durch den die Befestigungsplatte derart hindurchsteckbar oder hindurchgesteckt ist, dass zueinander entgegengesetzt liegende Platten-Enden der Befestigungsplatte in deren gesteckter Gebrauchslage zu beiden Seiten aus dem Durchsteckschlitz herausragen.
Zweckmäßigerweise weist einer der Montageabschnitte der Befestigungsplatte wenigstens zwei langlochartige Montagelöcher auf, während der andere Montageabschnitt mit einem Montageloch in Form einer fensterartigen Einhängeöffnung ausgestattet ist. Zweckmäßigerweise erstrecken sich die Längsachsen der beiden Langlöcher des ersten Montageabschnitts in zueinander verschiedenen Richtungen, beispielsweise erstreckt sich die Längsachse des einen Langlochs in die Y-Richtung und die Längsachse des anderen Montagelochs in die X-Richtung einer durch kartesische X-, Y-Koordinaten aufgespannten Ebene. Dadurch wird ein Toleranzausgleich sowohl in Höhen als auch in Breitenrichtung der Steckdosenanordnung beim Einhängen der Befestigungsplatte in bereits an den Peripheriebauteilen befindlichen Montageelementen, beispielsweise Nägel, geschaffen.
Bei einer Weiterbildung der Erfindung weist die Befestigungsplatte ein Halteglied zu deren lagestabilen Fixierung im Aufnahmeschlitz auf. Zweckmäßigerweise ist das Halteglied in der Einbaulage der Befestigungsplatte in einer im zugeordneten Endabschnitt ausgebildeten Halteöffnung aufgenommen. Erfinderungsgemäß ist das Halteglied als federndes Rastglied ausgebildet, das beim Einführen der Befestigungsplatte in den Aufnahmeschlitz zurück federt und in die Halteöffnung einrastet. Es ist also eine einfach, werkzeuglose Bestückung der Befestigungsschnittstelle mit der zugeordneten Befestigungsplatte möglich.
Bei einer Weiterbildung der Erfindung ist das Befestigungselement als Haltewinkel ausgebildet, der einen in den Aufnahmeschlitz einführbaren und dort gelagerten Lagerabschnitt besitzt. Zweckmäßigerweise befinden sich an beiden Endabschnitten der Steckdosenanordnung identisch ausgestaltete Befestigungsschnittstellen, wodurch insbesondere die Bestückung beider Endabschnitte mit Haltewinkeln ermöglicht ist. Zweckmäßigerweise dienen die Haltewinkel zum Aufstellen der Steckdosenanordnung, wobei die Steckdosenanordnung durch den winkelig zu einer Auflagefläche des Haltewinkels angeordnete Lagerabschnitt in eine schräge Winkellage bezüglich des Untergrunds gebracht werden kann.

Bei einer Weiterbildung der Erfindung ist die Halteöffnung zur Aufnahme des Halteglieds als weitere Befestigungsschnittstelle zur Befestigung eines weiteren Befestigungselementes ausgebildet.

Es ist möglich, dass das weitere Befestigungselement als mit wenigstens einem Permanentmagneten ausgestattete Magnetplatte ausgebildet ist.

Bei einer Weiterbildung der Erfindung weist die wenigstens eine Befestigungsschnittstelle einen Halteschlitz zur Aufnahme und Halterung eines Befestigungselementes in Form eines Befestigungsbandes auf. Das Befestigungsband kann beispielsweise als Klettband, Kabelbinder oder Gurt ausgeführt sein.

Ein bevorzugtes Ausführungsbeispiel der Erfindung ist in der Zeichnung dargestellt und wird im Folgenden näher erläutert.

In den Zeichnungen zeigen:
- Figur 1: eine perspektivische Rückansicht auf ein bevorzugtes Ausführungsbeispiel der erfindungsgemäßen Steckdosenanordnung,
- Figur 2: eine perspektivische Ansicht auf ein Endstück der Steckdosenanordnung gemäß Figur 1,
- Figur 3: eine perspektivische Ansicht auf ein Gehäuse-Ende der Steckdosenanordnung von Figur 1 mit einem Befestigungselement in Form einer Befestigungsplatte,
- Figur 4: eine perspektivische Ansicht der Befestigungsplatte von Figur 3,
- Figur 5: eine perspektivische Darstellung auf das Endstück der Steckdosenanordnung gemäß Figur 1 bestückt mit einem Befestigungsband,
- Figur 6: eine perspektivische Ansicht analog Figur 3 mit einem Befestigungselement in Form eines Haltewinkels,
- Figur 7: eine perspektivische Ansicht des Haltewinkels von Figur 6
- Figur 8: Eine perspektivische Querschnitts-Darstellung des Endstücks aus Figur 1 mit einem ebenfalls querseitig geschnittenen Befestigungselement in Form einer Magnetplatte.

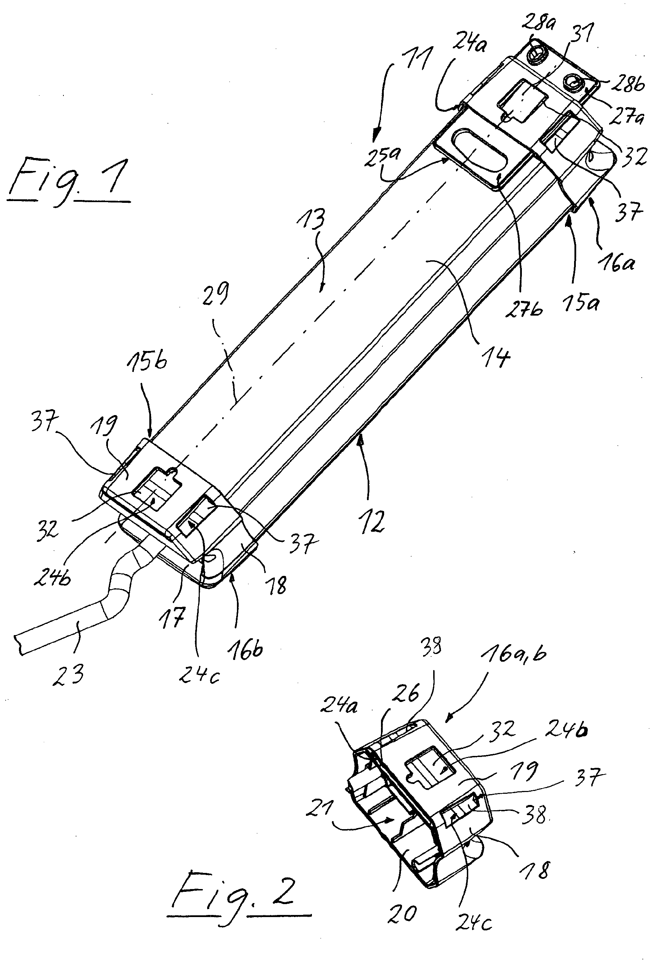

Die Figuren 1 bis 7 zeigen ein erstes Ausführungsbeispiel der erfindungsgemäßen Steckdosenanordnung 11. Die Steckdosenanordnung 11 ist beispielhaft in Form einer Steckdosenleiste mit mehreren linear angeordneten Steckdosen (nicht dargestellt) gezeigt. Die Erfindung wäre jedoch auch auf andere Steckdosenanordnungen beispielsweise einer Steckdosenbaugruppe, die von der Leistenform abweicht, anwendbar.

Die beispielhaft gezeigte Steckdosenleiste besitzt ein Gehäuse 12, das wiederum im Beispielsfall einen Grundkörper 13 und eine in den Grundkörper eingesetzte Steckdosenbaugruppe (nicht dargestellt) mit mehreren linear angeordneten Steckdosen besitzt. Der Grundkörper ist beispielsweise aus Metallmaterial, beispielweise Aluminium gefertigt. In diesem Fall eignet sich das Strangpressverfahren, sodass der Grundkörper ein Aluminium-Strangpresskörper ist. Das Gehäuse 12 besitzt einen Gehäuse-Boden 14, der im Beispielsfall vom Boden des Grundkörpers 13 gebildet ist. Entgegengesetzt zum Gehäuse-Boden 14 liegt die Gehäuse-Oberseite (nicht dargestellt) die zweckmäßigerweise von der Steckdosenbaugruppe und den Steckdosentöpfen der Steckdosen gebildet ist.

Das Gehäuse besitzt zwei einander entgegengesetzte Gehäuse-Enden 15a, 15b, die im Beispielsfall jeweils offen sind, da der Grundkörper 13 wie vorstehend beschrieben ein Strangpressprofil ist.

Um die Gehäuse-Enden 15a, 15b abzudecken beziehungsweise zu verschließen, dienen Endabschnitte 16a, 16b in Form von separat vom Gehäuse 12 ausgebildeten Endstücken. Die Endstücke sind zweckmäßigerweise als Kunststoffspritzgießteile ausgebildet und werden auf die offenen Gehäuse-Enden 15a, 15b aufgesetzt und dort befestigt, beispielweise verrastet oder mittels Befestigungsmitteln, beispielsweise Befestigungsschrauben, mit dem Grundkörper 13 verschraubt.

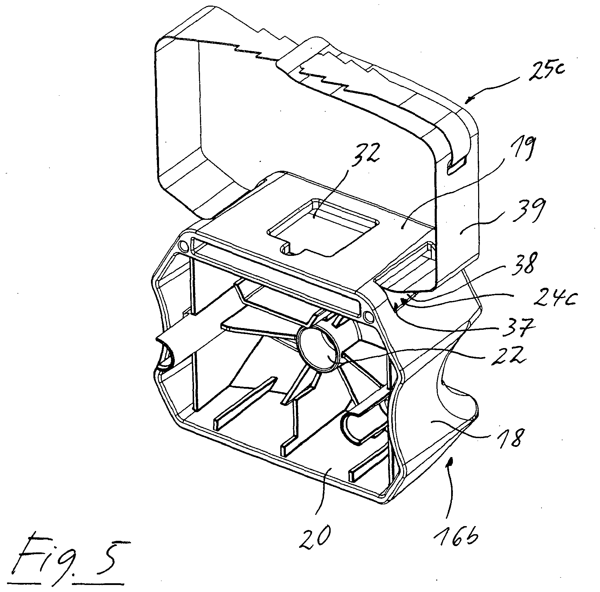

Die Endstücke sind jeweils kappenartig ausgestaltet, besitzen also jeweils eine Stirnwand 17, die in der Einbaulage der Endstücke den stirnseitigen Abschluss der Steckdosenleiste bilden. Die Endstücke besitzen ferner jeweils zwei entgegengesetzt zueinander liegende Längswände 18, einen Boden 19 und einen dem Boden 19 entgegengesetzte Deckenwand 20. Wie insbesondere in den Figuren 2 und 5 gezeigt, begrenzen die Stirnwand 17, die Längswände 18, der Boden 19 und die Deckenwand 20 gemeinsam einen Innenraum 21 eines jeweiligen Endstücks, in das das zugeordnete Gehäuse-Ende 15a des Gehäuses 12 aufgenommen ist. In der Stirnwand 17 befindet sich ferner noch eine insbesondere kreisrunde Durchgangsöffnung 22 zur Durchführung des Netzkabels 23.

Die Längswände 18 und auch die Stirnwand 17 sind an die Außenkontur des Grundkörpers 13 angepasst.

Wie insbesondere in Figur 1 dargestellt, weist wenigstens einer der Endabschnitte 16a, 16b wenigstens eine Befestigungsschnittstelle 24a, 24b, 24c zur lösbaren Befestigung eines Befestigungselementes 25a-d auf, das seinerseits zur Befestigung und Anlagerung an einem Peripheriebauteil dient.

Gemäß gezeigtem Beispielsfall befindet sich die wenigstens eine Befestigungsschnittstelle 24a-c am Endstück. Zweckmäßigerweise sind die beiden Endstücke bis auf die Durchgangsöffnung 22 für das Netzkabel 23 identisch ausgestaltet und besitzen also jeweils wenigstens eine Befestigungsschnittstelle 24a-c.

Wie insbesondere in Figur 1 beispielhaft gezeigt, sind am Endstück jeweils drei Befestigungsschnittstellen 24a-c vorgesehen.

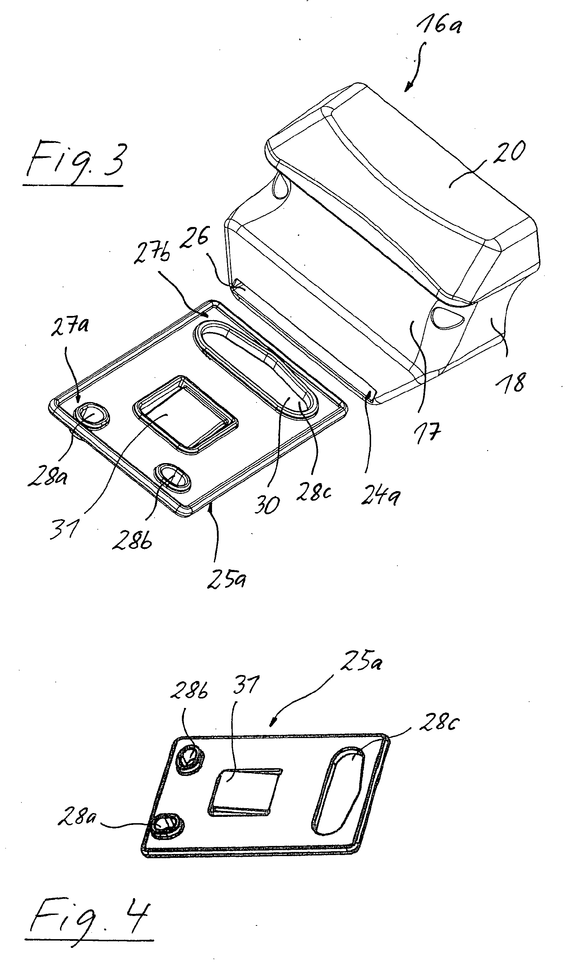

Wie insbesondere in den Figuren 3,5 und 6 gezeigt, ist eine erste Befestigungsschnittstelle 24a vorgesehen, die einen sich im Wesentlichen parallel zum Gehäuse-Boden 14 erstreckenden Aufnahmeschlitz 26 zur Aufnahme und Halterung eines Befestigungselementes 25a, 25c dient.

Die Steckdosenanordnung umfasst ein erstes Befestigungselement 25a in Form einer Befestigungsplatte. Die Befestigungsplatte besitzt an zwei einander entgegengesetzten Platten-Enden Montageabschnitte 27a, 27b, an denen wenigstens ein Montageloch 28a-c ausgebildet ist.

Wie insbesondere in Figur 1 dargestellt, lässt sich die Befestigungsplatte in den als Durchsteckschlitz ausgebildeten Aufnahmeschlitz 26 einstecken, wobei die beiden entgegengesetzt liegenden Platten-Enden in der Gebrauchslage zu beiden Seiten aus dem Durchsteckschlitz herausragen.

Die Befestigungsplatte ist als Wendeplatte ausgebildet, sodass wahlweise der einer oder der andere Montageabschnitt 27a, 27b aktiv ist. Der aktive Montageabschnitt 27a, 27b steht ein Stück weit als Verlängerung des Gehäuse-Bodens 14 und der Außenseite beziehungsweise Stirnwand 17 des Endstücks nach außen ab. Der erste Montageabschnitt 27a besitzt zwei Montagelöcher 28a, 28b, die langlochartig ausgerichtet sind. Von den beiden Montagelöchern 28a, 28b erstreckt sich eines entlang der Längsachse 29 der Steckdosenleiste, während das andere Montageloch 28b quer zur Längsachse ausgerichtet ist.

Mit der Befestigungsplatte und den beiden Montagelöchern 28a, 28b lässt sich die Steckdosenleiste beispielweise an einer Gebäudewand aufhängen. Hierzu bedarf es zweier Schrauben oder Nägel, die durch die entsprechende Montagelöcher 28a, 28b hindurchgeführt sind. Die verschiedenen Ausrichtungen der Montagelöchern 28a, 28b erlauben einen Toleranzausgleich, sodass eine exakte Ausrichtung der Steckdosenanordnung 11 am Peripheriebauteil möglich ist.

Der zweite Montageabschnitt 27b besitzt ebenfalls ein Montageloch 28c in Form eines fensterartigen Einhängeöffnung 30. Dadurch lässt sich die Steckdosenanordnung insbesondere an bereits montierte Befestigungsmittel, beispielsweise Schrauben oder Nägel, einhängen.

Wie insbesondere in Figur 1 gezeigt, erstreckt sich der nicht aktive Montageabschnitt, im Beispielsfall der zweite Montageabschnitt 27b, mit der Einhängeöffnung 30 parallel entlang des Gehäuse-Bodens 14.

Die Befestigungsplatte besitzt ferner ein Halteglied 31 zu deren lagestabilen Fixierung im Aufnahmeschlitz 26. Wie insbesondere in Figur 1 dargestellt, ist das Halteglied 31 in Form eines federnden Rastglieds, insbesondere als federnde Rastzunge ausgebildet. Wie insbesondere in Figur 4 gezeigt, ist die Rastzunge aus dem Material der Befestigungsplatte herausgeformt und winkelig von dieser von der Unterseite der Befestigungsplatte nach unten umgebogen. Beim Einführen der Befestigungsplatte in den zugeordneten Aufnahmeschlitz 26 wird die Rastzunge durch die den Aufnahmeschlitz 26 begrenzende Wandung nach unten gedrückt und rastet in eine im Boden 19 des Endstücks ausgebildeten fensterartigen Halteöffnung 32 ein. Die im Bereich der Halteöffnung 32 hochschnappende Rastzunge hintergreift dann einen Wandabschnitt, der die Halteöffnung 32 begrenzt, wodurch die Befestigungsplatte im Ausnahmeschlitz 26 lagestabil fixiert ist. Zur Demontage der Befestigungsplatte, wird die Rastzunge in Richtung Gehäuse-Boden 14 gedrückt, sodass die Hintergreifung aufgehoben wird und die Befestigungsplatte aus dem Aufnahmeschlitz 26 herausgezogen werden kann.

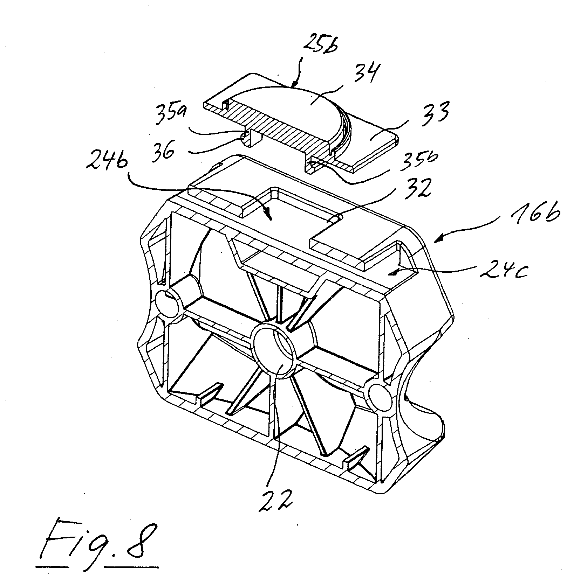

Die Halteöffnung 32, die zum Einrasten der Rastzungen der Befestigungsplatte dient, ist gleichzeitig eine zweite Befestigungsschnittstelle 24b für ein anderes Befestigungselement, das in Figur 8 beispielhaft in Form einer Magnetplatte 33 gezeigt ist. Die Magnetplatte 33 ist im Beispielsfall mit einem beispielsweise scheibenförmigen Permanentmagneten 34 bestückt, worüber die Steckdosenanordnung 11 an ein magnetisches Peripheriebauteil angedockt werden kann. Der Permamentmagnet 34 befindet sich an der Unterseite der Magnetplatte, während sich an der entgegengesetzten Oberseite Rastmittel in Form von zwei einander gegenüberliegenden und parallel zueinander ausgerichteten und von der Oberseite der Magnetplatte 33 abstehenden Raststegen 35a, 35b befinden. Die Raststege 35a, 35b besitzen jeweils an ihren freien Enden nach außen, d.h. vom anderen Raststeg weg weisenden Rastnasen 36a, 36b. Zur Befestigung der Magnetplatte 33 wird diese an die Halteöffnung 32 herangeführt, wobei die beiden Raststege 35a, 35b beim Einführen durch die die Halteöffnung umrandenden Wandabschnitte aufeinander zu gedrückt werden, wodurch die Rastnasen 36 durch die Öffnung hindurchgeführt werden. Nach dem Passieren der Halteöffnung 32 schnappen die beiden Rastnasen 36 wieder zurück in ihre Ausgangsstellung, wobei die Rastnasen 36a, 36b die Unterseite des mit der Halteöffnung 32 ausgestatteten Bodens hintergreifen, wodurch die Magnetplatte lagerstabil fixiert ist.

Es ist ferner eine dritte Befestigungsschnittstelle 24c vorgesehen, deren Funktion insbesondere in Figur 5 gezeigt ist. Die dritte Befestigungsschnittstelle 24c umfasst einen Halteschlitz 37, der zwischen zwei einander entgegengesetzt an den jeweiligen Längswänden 18 angeordneten Schlitzöffnungen 38 verläuft. Die Schlitzöffnungen 38 sind jeweils parallel zur Längsachse 29 der Steckdosenleiste orientiert. Die Schlitzöffnungen 38 münden jeweils in den Aufnahmeraum des Aufnahmeschlitzes 26, so dass der Halteschlitz 37 im Endeffekt den Aufnahmeraum des Aufnahmeschlitzes 26 mit nutzt.

Wie insbesondere in Figur 5 gezeigt, ist die dritte Befestigungsschnittstelle 24c im Wesentlichen durch ein Befestigungselement in Form eines Befestigungsbandes 39 nutzbar, das durch die beiden Schlitzöffnungen 38 eingefädelt werden kann. Werden beispielsweise beide dritte Befestigungsschnittstellen 24c an den beiden Endstücken mit Befestigungsbändern 39 bestückt, so lässt sich die Steckdosenleiste werkzeuglos an insbesondere säulenartigen Peripheriebauteilen, beispielsweise Tischfüßen, befestigen.

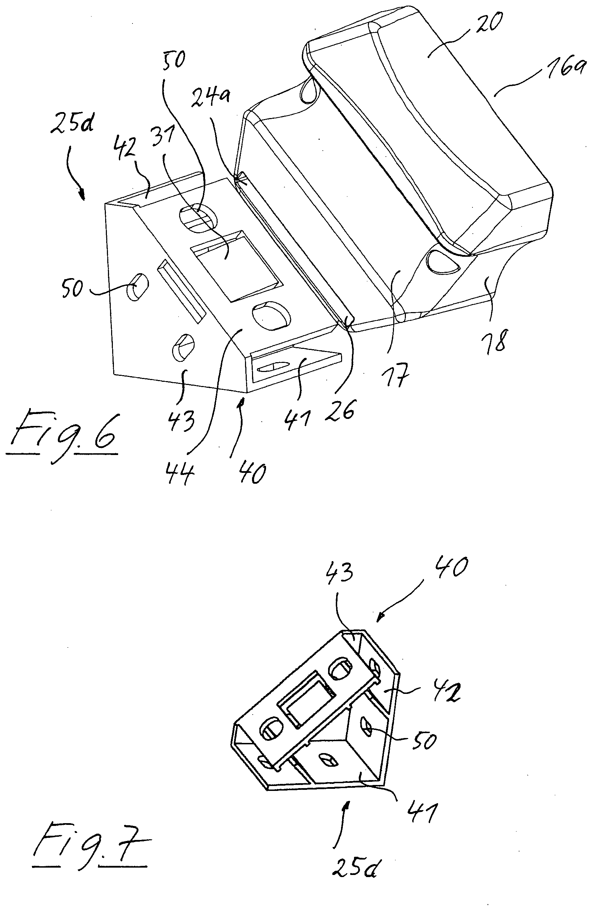

Wie insbesondere in den Figuren 6 und 7 gezeigt, umfasst die Steckdosenanordnung 11 noch ein viertes Befestigungselement 25d in Form eines Haltewinkels 40. Der Haltewinkel 40 besitzt zwei rechtwinklig zueinander ausgerichtete Halteschenkel 41, 42, die zusätzlich zu ihrer stirnseitigen Verbindung mittels eines in etwa dreiecksförmigen Verbindungsabschnitts 43 an einer Längsseite miteinander verbunden sind. Sowohl an den beiden Halteschenkeln 41, 42 als auch am Verbindungsabschnitt 43 befinden sich Montagelöcher 50. An der Hypothenuse des in etwa dreiecksförmigen Verbindungsabschnitts 43 ist im Winkel von ca. 90° ein Lagerabschnitt 44 angesetzt, der wie insbesondere in Figur 6 dargestellt, zum Einführen in den Aufnahmeschlitz 26 der ersten Befestigungsschnittstelle 24a am Endstück dient. Der Lagerabschnitt 44 besitzt ebenfalls ein Halteglied 31 in Form einer Rastzunge, die aus dem Material des Lagerabschnitts 44 heraus geformt ist und in analoger Weise zum Halteglied 31 der Befestigungsplatte in die Halteöffnung 32 am Boden 19 des Endstücks eingerastet werden kann. Durch den Haltewinkel 40 und den in etwa im Winkel von 45° zu den beiden Halteschenkeln 41, 42 ausgerichteten Lagerabschnitt 44 lässt sich die Steckdosenleiste in eine schräge Lage bringen, so dass sie insbesondere an schwer zugänglichen Unterbringungsorten besser zugänglich ist, als eben auf dem Boden abgestellte Steckdosenleisten.

## Patentansprüche

1. Steckdosenanordnung, mit einem Gehäuse (12), das wenigstens eine Steckdose aufweist, wobei das Gehäuse (12) zwei zueinander entgegengesetzte Gehäuse-Enden (15a, 15b) aufweist, an denen jeweils ein Endabschnitt (16a, 16b) angeordnet ist, wobei wenigstens einer der Endabschnitte (16a, 16b) wenigstens eine Befestigungsschnittstelle (24a-c) zur lösbaren Befestigung eines Befestigungselementes (25a-d) aufweist, das seinerseits zur Befestigung oder Anlagerung an einem Peripheriebauteil dient, und wobei die Steckdosenanordnung (11) wenigstens ein Befestigungselement (25a-d) aufweist, **dadurch gekennzeichnet, dass** die wenigstens eine Befestigungsschnittstelle (25a) einen sich im Wesentlichen parallel zum Gehäuse-Boden (14) erstreckenden Aufnahmeschlitz (26) zur Aufnahme und Halterung eines Befestigungselementes (25a) aufweist, wobei das Befestigungselement (25a) in Form einer mit wenigstens einem Montageabschnitt (27a, 27b) mit wenigstens einem Montageloch (28a-c) ausgestatteten Befestigungsplatte ausgebildet ist, wobei der Montageabschnitt (27a, 27b) in der Einbaulage derart vom Endabschnitt (16a, 16b) absteht, dass eine Befestigung der Steckdosenanordnung (11) an einem Peripheriebauteil, beispielsweise Gebäudewand, mittels mit dem Montageloch (28a-c) zusammenwirkender Montageelemente möglich ist, wobei die Befestigungsplatte als Wendeplatte mit mindestens zwei voneinander verschiedenartig ausgebildeten Montageabschnitten (27a, 27b) mit jeweils wenigstens einem Montageloch (28a-c) ausgebildet ist, wobei in der Einbaulage wahlweise der eine oder der andere Montageabschnitt (27a, 27b) für Befestigungszwecke aktiv ist oder dass die wenigstens eine Befestigungsschnittstelle (25a) einen sich im Wesentlichen parallel zum Gehäuse-Boden (14) erstreckenden Aufnahmeschlitz (26) zur Aufnahme und Halterung eines Befestigungselementes (25a) aufweist, wobei das Befestigungselement als Haltewinkel (40) ausgebildet ist, der einen in den Aufnahmeschlitz (26) einführbaren und dort gehaltenen Lagerabschnitt (44) besitzt oder dass die wenigstens eine Befestigungsschnittstelle (24a-c) einen Halteschlitz (37) zur Aufnahme und Halterung eines Befestigungselementes in Form eines Befestigungsbandes (39), beispielsweise Klettband, Kabelbinder, Gurt, aufweist.

2. Steckdosenanordnung nach Anspruch 1, **dadurch gekennzeichnet, dass** wenigstens einer der Endabschnitte (16a, 16b) als ein separat vom Gehäuse (12) ausgebildetes und am zugeordneten Gehäuse-Ende (15a, 15b) insbesondere lösbar befestigbares Endstück ausgebildet ist.

3. Steckdosenanordnung nach Anspruch 1, **dadurch gekennzeichnet, dass** wenigstens einer der Endabschnitte (16a, 16b) einstückig an das Gehäuse (12) angeformt ist und eines der Gehäuse-Enden (15a, 15b) bildet.

4. Steckdosenanordnung nach einem der vorhergehenden Ansprüche, **dadurch gekennzeichnet, dass** wenigstens zwei Befestigungselemente (25a-d) vorgesehen sind, die sich voneinander in Ausgestaltung und Funktionalität der Befestigung und Anlagerung an einem Peripheriebauteil unterscheiden, und wobei die wenigstens eine Befestigungsschnittstelle (24a-c) zur wahlweisen Befestigung des einen oder des anderen Befestigungselementes (25a-d) eingerichtet ist.

5. Steckdosenanordnung nach einem der vorhergehenden Ansprüche, **dadurch gekennzeichnet, dass** am wenigstens einen Endabschnitt (16a, 16b) mehrere Befestigungsschnittstellen (24a-c) ausgebildet sind, an denen jeweils ein zugeordnetes Befestigungselement (25a-d) befestigbar oder befestigt ist.

6. Steckdosenanordnung nach Anspruch 5, **dadurch gekennzeichnet, dass** sich die Befestigungsschnittstellen (25a-d) voneinander in ihrer Ausgestaltung unterscheiden.

7. Steckdosenanordnung nach einem der vorhergehenden Ansprüche, **dadurch gekennzeichnet, dass** einer der Montageabschnitte (27a, 27b) wenigstens zwei langlochartige Montagelöcher (28a, 28b) aufweist und der andere Montageabschnitt (27b) mit einem Montageloch (28c) in Form einer fensterartigen Einhängeöffnung (30) ausgestattet ist.

8. Steckdosenanordnung nach einem der Ansprüche 7, **dadurch gekennzeichnet, dass** die Befestigungsplatte ein Halteglied (31) zu deren lagestabilen Fixierung im Aufnahmeschlitz (26) aufweist.

9. Steckdosenanordnung nach Anspruch 8, **dadurch gekennzeichnet, dass** das Halteglied (31) in der Einbaulage der Befestigungsplatte in einer im zugeordneten Endabschnitt (16a, 16b) ausgebildeten Halteöffnung (32) aufgenommen ist.

10. Steckdosenanordnung nach Anspruch 9, **dadurch gekennzeichnet, dass** das Halteglied (31) als federndes Rastglied ausgebildet ist, das beim Einführen der Befestigungsplatte in den Aufnahmeschlitz (26) zurückfedert und in die Halteöffnung (32) einrastet.

11. Steckdosenanordnung nach Anspruch 9 oder 10, **dadurch gekennzeichnet, dass** die Halteöffnung als weitere Befestigungsschnittstelle zur Befestigung eines weiteren Befestigungselementes ausgebildet ist.

12. Steckdosenanordnung nach Anspruch 11, **dadurch gekennzeichnet, dass** das weitere Befestigungselement als mit einem Permanentmagneten (34) ausgestattete Magnetplatte (33) ausgebildet ist.

## Claims

1. Socket outlet assembly with a housing (12) which has at least one socket outlet, wherein the housing (12) has two housing ends (15a, 15b) opposite one another, on each of which is provided an end section (16a, 16b), wherein at least one of the end sections (16a, 16b) has at least one fastening interface (24a-c) for the releasable fastening of a fastening element (25a-d) which in turn serves for fastening or attachment to a peripheral part, and wherein the socket outlet assembly (11) has at least one fastening element (25a-d), **characterised in that** the fastening interface or interfaces (25a) has or have a locating slot (26) extending substantially parallel to the housing base (14) for the locating and holding of a fastening element (25a), wherein the fastening element (25a) is in the form of a fastening plate equipped with at least one mounting section (27a, 27b) with at least one mounting hole (28a-c), wherein the mounting section (27a, 27b) in the installed position protrudes from the end section (16a, 16b) in such a way that fastening of the socket outlet assembly (11) to a peripheral part, for example a building wall, by means of mounting elements working in conjunction with the mounting hole (28a-c) is possible, wherein the fastening plate is in the form of a reversing plate with at least two mounting sections (27a, 27b), differing from one another, each with at least one mounting hole (28a-c), wherein in the installed position either one or the other mounting section (27a, 27b) is active for fastening purposes, or that the fastening interface (25a) has a locating slot (26) extending substantially parallel to the housing base (14) for the locating and holding of a fastening element (25a), wherein the fastening element (25a) is in the form of a retaining bracket (40) which has a bearing section (44) which may be inserted in the locating slot (26) and held there, or that the fastening interface (24a-c) has a retaining slot (37) for the locating and holding of a fastening element in the form of a fastening tape (39), for example Velcro tape, cable ties or belt.

2. Socket outlet assembly according to claim 1, **characterised in that** at least one of the end sections (16a, 16b) is in the form of an end piece, separate from the housing (12) and able to be fastened, in particular releasably, to the assigned housing end (15a, 15b).

3. Socket outlet assembly according to claim 1, **characterised in that** at least one of the end sections (16a, 16b) is moulded integrally with the housing (12) and forms one of the housing ends (15a, 15b).

4. Socket outlet assembly according to any of the preceding claims, **characterised in that** at least two fastening elements (25a-d) are provided, differing from one another in design and functionality of fastening and attachment to a peripheral part, and wherein at least one fastening interface (24a-c) is set up for optional fastening to one or the other fastening element (25a-d).

5. Socket outlet assembly according to any of the preceding claims **characterised in that**, on at least one end section (16a, 16b) several fastening interfaces (24a-c) are formed, to which in each case an assigned fastening element (25a-d) is or may be fastened.

6. Socket outlet assembly according to claim 5, **characterised in that** the fastening interfaces (25a-d) differ from one another in their design.

7. Socket outlet assembly according to any of the preceding claims, **characterised in that** one of the mounting sections (27a, 27b) has at least two elongated mounting holes (28a-c), and the other mounting section (27b) is equipped with a mounting hole (28c) in the form of a window-like suspension opening (30).

8. Socket outlet assembly according to claim 7, **characterised in that** the fastening plate has a holding element (31) for fixing in a stable position in the locating slot (26).

9. Socket outlet assembly according to claim 8, **characterised in that** the holding element (31), in the installed position of the fastening plate, is held in a retaining orifice (32) formed in the assigned end section (16a, 16b).

10. Socket outlet assembly according to claim 9, **characterised in that** the holding element (31) is in the form of a sprung latching element which springs back on insertion of the fastening plate into the locating slot (26) and engages in the retaining orifice (32).

11. Socket outlet assembly according to claim 9 or 10, **characterised in that** the retaining orifice is in the form of a further fastening interface for the fastening of a further fastening element.

12. Socket outlet assembly according to claim 11, **characterised in that** the further fastening element is in the form of a magnetic plate (33) equipped with permanent magnets (34).

## Revendications

1. Agencement de prise de courant, avec un boîtier (12) qui présente au moins une prise de courant, dans lequel le boîtier (12) présente deux extrémités de boîtier (15a, 15b) opposées l'une à l'autre, sur lesquelles est disposée respectivement une portion d'extrémité (16a, 16b), dans lequel au moins une des portions d'extrémité (16a, 16b) présente au moins une interface de fixation (24a-c) pour la fixation amovible d'un élément de fixation (25a-d) qui sert à son tour à la fixation ou à l'attachement à un composant périphérique, et dans lequel l'agencement de prise de courant (11) présente au moins un élément de fixation (25a-d), **caractérisé en ce que** l'au moins une interface de fixation (25a) présente une fente de réception (26) s'étendant sensiblement parallèlement au fond du boîtier (14) pour recevoir et maintenir un élément de fixation (25a), dans lequel l'élément de fixation (25a) est formé sous la forme d'une plaque de fixation équipée d'au moins une portion de montage (27a, 27b) avec au moins un trou de montage (28a-c), dans lequel la portion de montage (27a, 27b), en position de montage, fait saillie de la portion d'extrémité (16a, 16b) de telle sorte qu'une fixation de l'agencement de prise de courant (11) à un composant périphérique, par exemple une paroi de bâtiment, est possible au moyen d'éléments de montage qui coopèrent avec le trou de montage (28a-c), dans lequel la plaque de fixation est formée comme une plaque réversible avec au moins deux portions de montage (27a, 27b) formées différentes l'une de l'autre, avec chacune au moins un trou de montage (28a-c), dans lequel, en position de montage, l'une ou l'autre portion de montage (27a, 27b), au choix, est active à des fins de fixation ou **en ce que** l'au moins une interface de fixation (25a) présente une fente de réception (26) s'étendant sensiblement parallèlement au fond du boîtier (14) pour recevoir et maintenir un élément de fixation (25a), dans lequel l'élément de fixation est formé comme une équerre de montage (40) qui possède une section d'appui (44) pouvant être introduite dans la fente de réception (26) et maintenue dans celle-ci, ou **en ce que** l'au moins une interface de fixation (24a-c) présente une fente de retenue (37) pour recevoir et maintenir un élément de fixation sous la forme d'une bande de fixation (39), par exemple une bande auto-agrippante, un attache-câble, une sangle.

2. Agencement de prise de courant selon la revendication 1, **caractérisé en ce qu'**au moins une des portions d'extrémité (16a, 16b) est formée comme une pièce d'extrémité formée séparément du boîtier (12) et pouvant être fixée, en particulier de manière amovible, à l'extrémité de boîtier (15a, 15b) associée.

3. Agencement de prise de courant selon la revendication 1, **caractérisé en ce qu'**au moins une des portions d'extrémité (16a, 16b) est formée sur le boîtier (12) d'une seule pièce avec celui-ci et forme l'une des extrémités de boîtier (15a, 15b).

4. Agencement de prise de courant selon l'une des revendications précédentes, **caractérisé en ce qu'**au moins deux éléments de fixation (25a-d) sont prévus qui diffèrent l'un de l'autre par leur conception et leur fonctionnalité de fixation et leur attachement à un composant périphérique, et dans lequel l'au moins une interface de fixation (24a-c) est adaptée pour la fixation au choix de l'un ou l'autre élément de fixation (25a-d).

5. Agencement de prise de courant selon l'une des revendications précédentes, **caractérisé en ce que** plusieurs interfaces de fixation (24a-c) sont formées au niveau d'au moins une portion d'extrémité (16a, 16b), à chacune desquelles est fixé ou peut être fixé un élément de fixation (25a-d) associé.

6. Agencement de prise de courant selon la revendication 5, **caractérisé en ce que** les interfaces de fixation (25a-d) diffèrent les unes des autres par leur configuration.

7. Agencement de prise de courant selon l'une des revendications précédentes, **caractérisé en ce que** l'une des portions de montage (27a, 27b) comporte au moins deux trous de montage (28a, 28b) de type trous oblongs et l'autre portion de montage (27b) est pourvue d'un trou de montage (28c) sous la forme d'une ouverture de suspension (30) de type fenêtre.

8. Agencement de prise de courant selon la revendication 7, **caractérisé en ce que** la plaque de fixation présente un élément de retenue (31) en vue de sa fixation stable en position dans la fente de réception (26).

9. Agencement de prise de courant selon la revendication 8, **caractérisé en ce que** l'élément de retenue (31), en position de montage de la plaque de fixation, est reçu dans une ouverture de retenue (32) formée dans la portion d'extrémité (16a, 16b) associée.

10. Agencement de prise de courant selon la revendication 9, **caractérisé en ce que** l'élément de retenue (31) est formé comme un élément d'enclenchement élastique qui a un effet de ressort lorsque la plaque de fixation est insérée dans la fente de réception (26) et s'enclenche dans l'ouverture de retenue (32).

11. Agencement de prise de courant selon la revendication 9 ou 10, **caractérisé en ce que** l'ouverture de retenue est formée comme une interface de fixation supplémentaire pour fixer un élément de fixation supplémentaire.

12. Agencement de prise de courant selon la revendication 11, **caractérisé en ce que** l'élément de fixation supplémentaire est formé comme une plaque magnétique (33) munie d'un aimant permanent (34).
